# EUROPÄISCHE PATENTANMELDUNG

(11) **EP 0 887 243 A2**
(43) Veröffentlichungstag der Anmeldung: **30.12.1998**
(21) Anmeldenummer: 98108027.8
(22) Anmeldetag: 02.05.1998
(51) Int. Cl.: B61D 15/00, B60F 1/04

(54) **Einsatzfahrzeug, insbesondere Feuerwehrfahrzeug, für den Strassen- und Schienenbetrieb**

(30) Priorität: 27.06.1997 DE 19727289
(71) Anmelder: Marte, Arthur, 6833 Weiler (AT); Marte, Theodor, 6833 Weiler (AT)
(72) Erfinder: Marte, Arthur, 6833 Weiler (AT); Marte, Theodor, 6833 Weiler (AT)
(74) Vertreter: Riebling, Peter, Dr.-Ing.

(57) **Zusammenfassung**

Einsatzfahrzeug, insbesondere Feuerwehrfahrzeug für den Straßen- und Schienenbetrieb mit voneinander getrennten Einrichtungen 32, 33; 34, 35 zum Befahren von Straßen bzw. Schienen, wobei die Einrichtungen 34, 35 zum Befahren von Schienen angetrieben sind.

## Beschreibung

Gegenstand der vorliegenden Erfindung ist ein Einsatzfahrzeug, insbesondere ein Feuerwehrfahrzeug, für den Straßen- und Schienenbetrieb.

Bisher ist es lediglich bekannt, sogenannte Allzweckfahrzeuge, insbesondere Geländefahrzeuge sowohl straßentauglich als auch schienentauglich Zu gestalten.

Bei derartigen Geländewagen ist es bekannt, aus einem Straßenfahrzeug ein Schienenfahrzeug dadurch zu gestalten, daß dem Fahrgestell des Straßenfahrzeuges noch zusätzliche Elemente eines Schienenfahrzeuges zugeordnet sind, so daß dieses Geländefahrzeug auch auf Schienen betrieben werden kann. Hierzu ist bekannt, an dem Unterbau mindestens zwei Schienenachsen heb- und senkbar anzuordnen, welche geeignet sind, das Geländefahrzeug auf einer Schiene zu betreiben. Nachteil dieses bekannten Geländefahrzeuges ist, daß die auf die Schiene absenkbaren Schienenräder lediglich der Führung des Geländefahrzeuges auf den Schienen dienen, wobei aber diese Schienenräder selbst nicht angetrieben sind.

Damit ist also vorgesehen, daß die LKW-Reifen der Vorder- und Hinterachse auf den Schienen aufsetzen und die angetriebenen Reifen (z. B. der Hinterachse) dienen dem Antrieb des Schienenfahrzeuges während des Schienenbetriebes. Damit besteht aber der Nachteil, daß dieses Geländefahrzeug in seinem Verwendungszweck als Schienenfahrzeug nur eine geringe Geschwindigkeit haben darf, weil der Antrieb auf die Schienen über die LKW-Reifen erfolgt, was nur bis zu einer bestimmten Geschwindigkeit von z. B. maximal 30 km/h zugelassen ist.

Weiterer Nachteil dieses bekannten Geländefahrzeuges ist, daß wegen des Antriebes des Schienenfahrzeuges über die LKW-Reifen die Gefahr besteht, daß bei starken Lenkeinschlägen das Fahrzeug aus den Schienen springt und verunglückt.

Im übrigen ist ein derartiges, bekanntes Geländefahrzeug nicht für die Verwendung als Einsatzfahrzeug, insbesondere als volltaugliches Feuerwehrfahrzeug geeignet. Es fehlen nämlich die Räumlichkeiten zur Unterbringung beispielsweise einer Mannschaftskabine, zur Unterbringung eines Geräteraumes auf dem herkömmlichen Aufbau eines Geländefahrzeuges, zur Anbringung entsprechender Tanks und für die hydraulischen Aggregate, die einen beträchtlichen Platz einnehmen. Aus diesem Grunde war es bisher nicht möglich, herkömmliche, relativ kleine Fahrzeuge als Einsatzfahrzeuge, insbesondere als Feuerwehrfahrzeuge zu gestalten.

Der Erfindung liegt deshalb die Aufgabe zugrunde, ein Fahrzeug der eingangs genannten Art so weiterzubilden, daß es mit hoher Geschwindigkeit als Einsatzfahrzeug, insbesondere als Feuerwehrfahrzeug, auf Schienennetzen betrieben werden kann.

Zur Lösung der gestellten Aufgabe ist die Erfindung durch die technische Lehre des Anspruches 1 gekennzeichnet.

Wesentliches Merkmal der Erfindung ist, daß nun das erfindungsgemäße Einsatzfahrzeug ein vollstraßentaugliches Fahrzeug, insbesondere ein Feuerwehrfahrzeug (Rüstlöschfahrzeug) oder ein Hospitalfahrzeug, Bergefahrzeug, ein ABC-Einsatzfahrzeug, ein Mannschaftstransportwagen oder dergleichen ist.

Weiteres wesentliches Merkmal der Erfindung ist, daß das erfindungsgemäße Einsatzfahrzeug in seinem Schienenbetrieb den vollständigen Vorschriften für den Einsatz von Schienenfahrzeugen entspricht, das heißt, es handelt sich um ein volltaugliches Schienenfahrzeug, was mit dem Vorteil verbunden ist, daß dieses Schienenfahrzeug bis zu Geschwindigkeiten von 80 km/h betrieben werden kann.

Hier besteht ein wesentlicher Vorteil gegenüber den bekannten Geländefahrzeugen, denn die bekannten Geländefahrzeuge konnten nur bis zu einer Maximalgeschwindigkeit von 30 km/h auf Schienen betrieben werden.

Technisches Merkmal der Erfindung ist, daß dem volltauglichen Straßenfahrzeug eine hydraulisch angetriebener Schienenunterbau zugeordnet ist, der im wesentlichen aus einer anhebbaren und absenkbaren hydraulischen Vorderachse sowie aus einer ansenkbaren und hydraulischen Hinterachse besteht, wobei es für den Hubantrieb der beiden Achsen für das Schienenfahrzeug mehrere Möglichkeiten gibt. In einer ersten bevorzugten Ausführungsform ist es vorgesehen, daß der Hubantrieb über entsprechende Hubzylinder bewerkstelligt wird, die einzeln oder paarweise an jeweils einer Achse ansetzen und diese Achse wahlweise mit ihren Schienenrädern auf den Schienen aufsetzen oder von der Schiene abheben.

In einer anderen Ausgestaltung ist es vorgesehen, daß der Hubantrieb ein Spindelantrieb, ein Seilzug oder andere bekannte Hubantriebe sind.

Es wird im übrigen bevorzugt, wenn auch noch die LKW-Achsen (Vorderachse und Hinterachse) bezüglich ihrer Federung arretiert werden und damit in einer bestimmten Position festgesetzt werden.

Es kann auch vorgesehen sein, daß auch diese Achsen heb- und senbar ausgebildet sind.

Wesentliches Merkmal der Erfindung ist also, daß dem voll straßentauglichen Einsatzfahrzeug ein schienentauglicher Unterbau zugeordnet ist, der im wesentlichen aus einer Hydraulikpumpe besteht, die von dem Motorantrieb des Einsatzfahrzeuges beaufschlagt wird, von einem Hydrauliktank, aus dem die Hydraulikflüssigkeit entnommen wird und aus hydraulischen Antriebsmotoren, die bevorzugt direkt an den Achsen der Vorderachse und Hinterachse angeordnet sind, um die Achsen selbst direkt anzutreiben und zu bremsen.

Mit dieser technischen Lehre ergibt sich der wesentliche Vorteil, daß beim Einsatz dieses Fahrzeuges auf Schienen die LKW-Reifen von den Schienenoberflächen abgehoben werden und nicht mehr zum Antrieb des Fahrzeuges dienen. Damit besteht der Vorteil, daß das Fahrzeug als autonomes Schienenfahrzeug hydraulisch angetrieben und gebremst wird, ohne daß es hierbei eines Antriebes über die LKW-Reifen bedarf. Damit ergibt sich der Vorteil, daß dieses Schienenfahrzeug bis zu Geschwindigkeiten von 80 km/h auf Schienen betrieben werden kann, nämlich mit derselben Geschwindigkeit mit der es auch auf Straßen betrieben wird.

Wichtig ist, daß bei der Ausbildung des Einsatzfahrzeuges als Feuerwehrfahrzeug alle in der Norm vorgeschriebenen Geräte Platz finden und zusätzlich auch noch alle Aggregate, die dem Einsatz als Schienenfahrzeug zugeordnet sind. Hierbei ist es wichtig, daß diese Aggregate praktisch keinen Nutzraum des Feuerwehrfahrzeuges beanspruchen. Wichtig hierbei ist, daß die Aggregate des Hydraulikteiles so in dem Fahrzeug plaziert werden, daß die dem Feuerwehrfahrzeug zugeordneten Gerätschaften der Norm entsprechend untergebracht werden und hierbei keinerlei Beeinträchtigungen stattfinden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert gezeichnete Seitenansicht eines Feuerwehrfahrzeuges im Schienenbetrieb;
- Figur 2:: die gleiche Ansicht nach Figur 1 im Straßenbetrieb;
- Figur 3:: die Rückansicht des Fahrzeuges nach Figur 2.

In den dargestellten Zeichnungen ist ein Einsatzfahrzeug 1 in seiner Ausbildung als Rüstlöschfahrzeug dargestellt. Es weist einen Aufbau 2 auf, welcher im wesentlichen aus einer vorderen Fahrerkabine 3 besteht, hinter der eine Mannschaftskabine 4 angeordnet ist. Hinter der Mannschaftskabine sind in an sich bekannter Weise die Geräteräume 5 angeordnet.

Diese Geräteräume 5 sind in ebenfalls bekannter Weise durch entsprechende Verschlußtüren verschlossen.

Das Einsatzfahrzeug 1 weist eine LKW-Vorderachse 6 auf und dementsprechend eine angetriebene LKW-Hinterachse 7. Der Antrieb erfolgt über einen im vorderen Bereich am Unterbau angeordneten Motor 10, der über ein Getriebe 11 und eine Gelenkwelie 9 die Hinterachse 7 antreibt.

In an sich bekannter Weise ist die Vorderachse 6 mittels einer Achsfeder 18 (linksseitig und rechtsseitig) am Unterbau federnd aufgehängt und ebenso ist die Hinterachse jeweils über Achsfedern 14 federnd gegenüber dem Unterbau abgestützt, wobei die Achsfeder von vorderen und hinteren Aufnahmen 15, 16 jeweils aufgenommen ist.

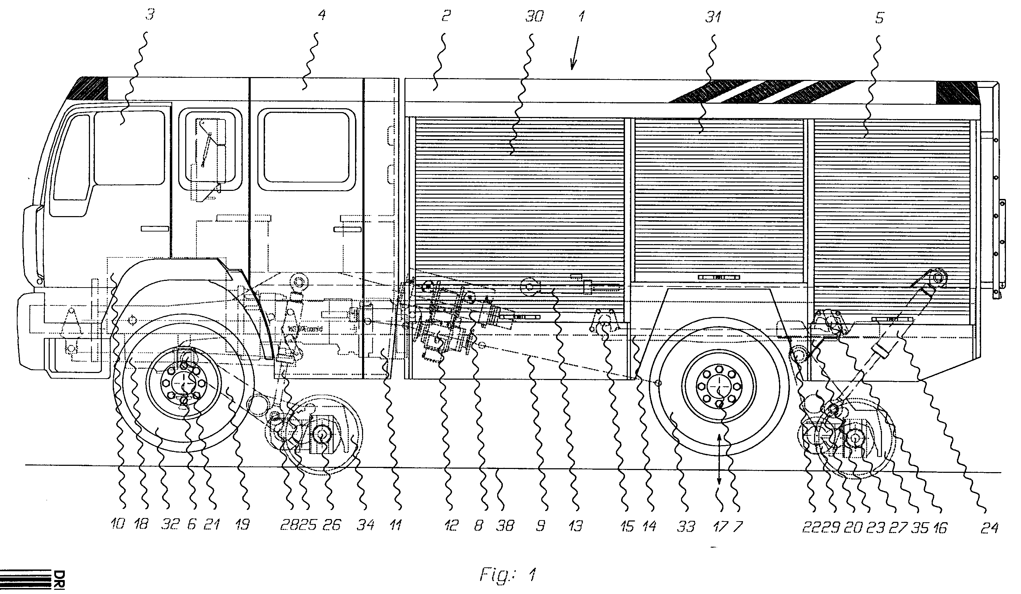

Sofern das Einsatzfahrzeug 1 als Schienenfahrzeug gemäß Figur 1 betrieben wird, ist ein autonomes, (d. h. für sich selbst arbeitendes) Fahrgestell gegeben.

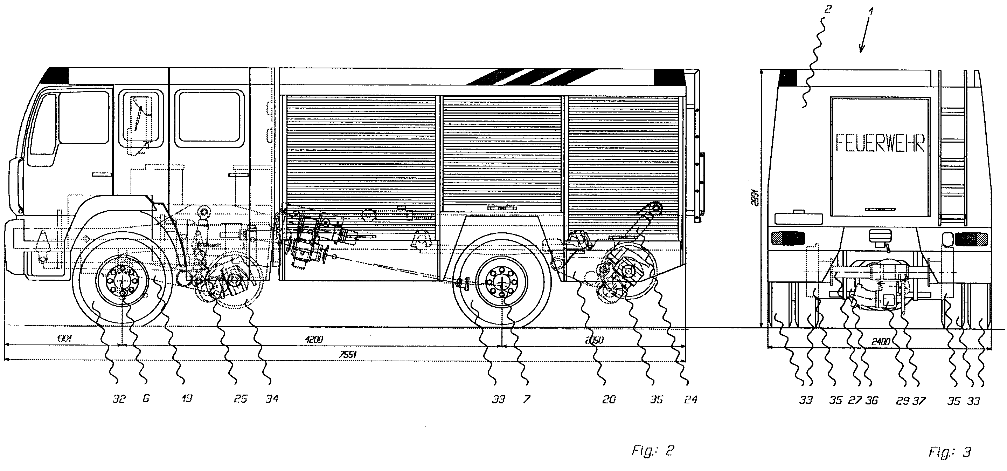

Dieses dem Schienenfahrzeug zugeordnete Fahrgestell besteht im wesentlichen aus vorderen und hinteren Achsschenkeln 19, 20, die jeweils in Aufnahmen 21, 22 schwenkbar gelagert sind. Am freien Ende des Achsschenkels 19, 20 ist jeweils die Schienenachse 26, 27 angeordnet. An den Schienenachsen 26, 27 sind jeweils die Schienenräder 34, 35 drehfest angeordnet (siehe Figur 3).

Jeder Schienenachse 26, 27 ist ein Hydraulikmotor 28, 29 zugeordnet.

Die Hydraulikmotoren 28, 29 werden von einer Hydraulikpumpe 8 beaufschlagt, welche in den Gelenkstrang zwischen dem Getriebe 11 und der Gelenkwelle 9 eingeschaltet ist. Diese Hydraulikpumpe erhält ihr Öl von einem Hydrauliktank 30, der bevorzugt platzsparend in einem der Geräteräume 5 untergebracht ist.

In einem der anderen Geräteräume 5 ist hierbei der Schaltschrank 31 für die Bedienung der Hydraulikanlage angeordnet.

Die Hydraulikpumpe 8 wird hierbei über ein eigenes Getriebe 12 beaufschlagt, welches Getriebe in den vorher erwähnten Gelenkstrang zwischen Getriebe 11 und Gelenkwelle 9 eingeschaltet ist.

Den schwenkbaren Achsschenkeln 19, 20 der Vorder- und Hinterachse sind entsprechende Hubzylinder 24, 25 zugeordnet, die von der Hydraulikpumpe 8 beaufschlagbar sind. Sie greifen mit ihren Kolbenstangen an den freien schwenkbaren Enden der Achsschenkel 19, 20 an, so daß diese heb- und senkbar ausgebildet sind.

Die Aufnahmen 21, 22 sind in zugeordneten Querträgern gehalten, wobei in der Zeichnung nach Figur 1 lediglich der hintere Querträger 23 sichtbar ist. Beide Querträger sind am LKW-Fahrgestell befestigt. Im folgenden wird noch als bevorzugte Ausführungsform dargestellt, daß die beiden LKW-Achsen 6, 7 des Fahrzeuges arretierbar sind, d. h. bei eingeschalteter Arretierung ist die Federung ausgeschaltet.

Hierzu ist es vorgesehen, daß jeder Achse ein Hubantrieb zugeordnet ist, wobei beispielsweise in Figur 1 lediglich der Hubantrieb für die Hinterachse dargestellt ist. Er besteht aus einem Hebezylinder 13, welcher über einen Seilzug (nicht zeichnerisch dargestellt) und zugeordnete Umlenkrollen (ebenfalls nicht zeichnerisch dargestellt) direkt auf die LKW-Hinterachse 7 wirkt und diese Hinterachse entgegen der Kraft der Feder 14 anhebt, solange bis die Hinterachse 7 am Unterbau arretiert ist und nicht mehr ausfedert.

Der Hubweg der Achsen 6, 7, in den Pfeilrichtungen 17 ist also relativ gering und ist so bemessen, daß die LKW-Reifen 32, 33 mit Sicherheit von der Schienenoberfläche 38 abheben und nicht mehr mit dieser zusammenwirken.

Gemäß Figur 2 wird dieses Einsatzfahrzeug auch als voll taugliches Straßenfahrzeug eingesetzt, wobei die gesamten, dem Schienenantrieb zugeordneten Achsen 26, 27 von der Schienenoberfläche 38 abgeschwenkt werden, so wie dies in Figur 2 dargestellt ist.

Die Anhebung des Schienenunterbaus ist so gestaltet, daß der vorgeschriebene Böschungwinkel für den Einsatz des Fahrzeuges als Straßenfahrzeug und die vorgeschiebene Bodenfreiheit gewährleistet sind.

Man erkennt aus dem Vergleich der Figur 1 mit Figur 2, daß der gesamte Schienenunterbau sehr platzsparend weggeschwenkt wird, wobei die beiden Achsschenkel 19, 20 im Gegenuhrzeigersinn nach oben verschwenkt werden.

Es versteht sich von selbst, daß die genannten Zylinder 24, 25 durch andere Hebemittel ersetzt werden können

In Figur 3 sind weitere Einzelheiten des Schienenaufbaus dargestellt. Hierbei ist erkennbar, daß eine die beiden Schienenräder 35 verbindende Schienenachse vorhanden ist, und unterhalb der Schienenachse der dem Antrieb zugeordnete Hydraulikmotor 29 angeordnet ist. Es ist zusätzlich noch eine Scheibenbremse 37 vorgesehen, die als Feststellbremse wirkt, wenn das Fahrzeug auf der Schiene steht und noch kein Druckaufbau des Hydrauliköls stattgefunden hat.

Wichtig ist, daß der Hydraulikantrieb für das Schienenfahrzeug, nämlich die Hydraulikpumpe zusammen mit ihrem Antrieb, gleichzeitig auch noch für den Antrieb der Feuerlöschpumpe, der Seilwinde und gegebenenfalls eines Stromgenerators verwendet wird. Hiermit werden wesentliche Vorteile erzielt, denn es bedarf dann keines eigenen separaten Motors mehr, um die genannten Aggregate anzutreiben, weil die ohnedies vorhandene Hydraulikpumpe zum Antrieb dieser Aggregate geeignet ist und bestimmt ist. Auf diese Weise wird gegenüber einem herkömmlichen Fahrzeug auch Platz gespart, weil der herkömmliche Verbrennungsmotor entfallen kann und statt dessen der dem Schienenfahrzeug zugeordnete Antrieb für den Antrieb der oben genannten Aggregate verwendet wird.

Dieses Hydraulikaggregat wird sowohl beim Einsatz des Einsatzfahrzeuges auf der Straße für den Antrieb der genannten Aggregate verwendet, als auch beim Einsatz des Fahrzeuges auf der Schiene, sofern dieses Fahrzeug auf der Schiene steht und sich im Einsatz befindet und die genannten Geräte betrieben werden müssen.

Ein Einsatz dieses Fahrzeuges beim Übergang vom Straßenverkehr auf die Schiene erfolgt so, daß das Fahrzeug als Straßenfahrzeug auf einen Bahnübergang gefahren wird, dort wird es in Schienenlängsrichtung ausgerichtet und durch Antrieb der entsprechenden Zylinder 24, 25 werden die Achsschenkel 19, 20 abgeschwenkt, so daß die Schienenräder 34, 35 in Eingriff mit der Schiene kommen, gleichzeitig wird damit das Fahrzeug angehoben und als letztes werden bei angehobenem Fahrzeug die Vorder- und Hinterachse gegenüber der Federung verriegelt.

Das Fahrzeug ist dann für den Schieneneinsatz gerüstet.

### Zeichnungslegende

- 1: Einsatzfahrzeug
- 2: Aufbau
- 3: Fahrerkabine
- 4: Mannschaftskabine
- 5: Geräteräume
- 6: LKW-Vorderachse
- 7: LKW-Hinterachse
- 8: Hydraulikpumpe
- 9: Gelenkwelle
- 10: Motor
- 11: Getriebe (LKW)
- 12: Getriebe (Hydraulik)
- 13: Hebezylinder
- 14: Achsfeder
- 15: Aufnahme
- 16: Aufnahme
- 17: Pfeilrichtung
- 18: Achsfelder
- 19: Achsschenkel (Vorderachse)
- 20: Achsschenkel (Hinterachse)
- 21: Aufnahme (vorne)
- 22: Aufnahme (hinten)
- 23: Querträger (hinten)
- 24: Hebezylinder (hinten)
- 25: Hebezylinder (vorne)
- 26: Schienenachse (vorne)
- 27: Schienenachse (hinten)
- 28: Hydraulikmotor (vorne)
- 29: Hydraulikmotor (hinten)
- 30: Hydrauliktank
- 31: Schaltschrank
- 32: LKW-Reifen (vorne)
- 33: LKW-Reifen (hinten)
- 34: Schienenrad (vorne)
- 35: Schienenrad (hinten)
- 37: Scheibenbremse
- 38: Schienenoberfläche

## Patentansprüche

1. Einsatzfahrzeug, insbesondere Feuerwehrfahrzeug für den Straßen- und Schienenbetrieb mit voneinander getrennten Einrichtungen (32, 33; 34, 35) zum Befahren von Straßen bzw. Schienen, **dadurch gekennzeichnet**, daß die Einrichtungen (34, 35) zum Befahren von Schienen angetrieben sind.

2. Einsatzfahrzeug nach Anspruch 1, **dadurch gekennzeichnet**, daß der Antrieb als Hydraulikmotor (28, 29) ausgebildet ist, der vom Motor des Einsatzfahrzeugs (1) über eine Hydraulikpumpe (8) angetrieben ist.

3. Einsatzfahrzeug nach Anspruch 1 oder 2, **dadurch gekennzeichnet**, daß die Einrichtungen (34, 35) heb- und senkbar ausgebildet sind.

4. Einsatzfahrzeug nach einem der Ansprüche 1 bis 3, **dadurch gekennzeichnet**, daß die Einrichtungen (32, 33) heb- und senkbar ausgebildet sind.

5. Einsatzfahrzeug nach einem der Ansprüche 1 bis 4, **dadurch gekennzeichnet**, daß die Einrichtungen (34, 35) mit einer Bremse (37) versehen sind.

6. Einsatzfahrzeug nach einem der Ansprüche 3 bis 5, **dadurch gekennzeichnet**, daß die Hydraulikpumpe (8) die Einrichtungen (34, 35), die diese bewegenden Bauteile (24, 25) sowie
